# EUROPÄISCHE PATENTSCHRIFT

(11) **EP 2 007 775 B1**
(45) Veröffentlichungstag und Bekanntmachung des Hinweises auf die Patenterteilung: **26.10.2011**
(21) Anmeldenummer: 07722281.8
(22) Anmeldetag: 19.04.2007
(51) Int. Cl.: C07F 7/02, C01B 33/00

(54) **VERFAHREN ZUR HERSTELLUNG VON WASSERSTOFFREICHEN CYCLOSILOXANEN**
PROCESS FOR THE MANUFACTURE OF HYDROGEN-RICH CYCLOSILOXANE
PROCÉDÉ DE PRODUCTION DE CYCLOSILOXANES RICHES EN HYDROGÈNE

(30) Priorität: 19.04.2006 DE 102006019015
(43) Veröffentlichungstag der Anmeldung: 31.12.2008
(73) Patentinhaber: Evonik Degussa GmbH, 45128 Essen (DE)
(72) Erfinder: FESTER, Gerrit, 08209 Auerbach/V. (DE); ROEWER, Gerhard, 09599 Freiberg (DE); KROKE, Edwin, 09633 Halsbrücke (DE)
(86) Internationale Anmeldenummer: PCT/DE2007/000723
(87) Internationale Veröffentlichungsnummer: WO 2007/118473

(56) Entgegenhaltungen:
- US-A- 2 810 628
- SEYFERTH, DIETMAR ET AL: "Cyclic polysiloxanes from the hydrolysis of dichlorosilane" INORGANIC CHEMISTRY , 22(15), 2163-7 CODEN: INOCAJ; ISSN: 0020-1669, 1983, XP002444114 in der Anmeldung erwähnt

## Beschreibung

Die vorliegende Erfindung betrifft ein Verfahren zur gezielten Synthese von wasserstoffreichen Cyclosiloxanen des Typs (H₂SiO)ₙ. Diese Verbindungen können z. B. als Zusatzstoff für Dicht- und Härtemittel oder als Hydriermittel Anwendung finden .

Wasserstoffreiche Cyclosiloxane sind bisher vornehmlich anhand von Berechnungen untersucht worden. Mittels ab Initio Berechnungen ließen sich für kleine Zyklen - (H₂SiO)ₙ mit n = 3, 4, 5 - die Kristallstrukturdaten und somit die Symmetrie der Verbindungen vorhersagen (T. Kudo, F. Hsahimoto, M.S. Gordon, Journal of Computational Chemistry 17 (1996) 1163).

Die ersten wasserstoffreichen Cyclosiloxane des Typs (H₂SiO)ₙ wurden schon in den Arbeiten von Stock et al. aus dem Jahr 1919 erwähnt und als "Prosiloxan" bezeichnet (A. Stock, C. Somieski, Ber. Dtsch. Chem. Ges. 52 (1919) 695).

In den folgenden Jahrzehnten gab es vermutlich aufgrund der hohen Reaktivität der unsubstituierten Cyclosiloxane nur sehr wenige Untersuchungen auf diesem Gebiet. In der Gasphase aus Dichlorsilan und Wasser gebildetes H₂SiO polymerisiert nur langsam. In der flüssigen Phase entstehen aus Dichlorsilan und Wasser Polykondensate.

Die Silicium-Wasserstoff-Bindung ist gegen Basen, aber auch gegen starke Säuren bei pH-Werten von unter 1 instabil (siehe US 2810628). Dies fährt bei der Synthese von Cyclosiloxanen oft zu einer höheren Vernetzung des Siloxans durch T-Einheiten. Um dieser vorzubeugen, können verschiedene Techniken angewandt werden (D. Seyferth, C. Prud'Homme. G.H. Wiseman, Inorg.Chem. 22 (1983) 2163).

Gemäß US 2810628 können bei Verwendung einer Mischung aus einem nichtprotischen Lösungsmittel (z. B. Hexan oder Diethylether) und geringer Mengen Wasser, resultiert ein unübersichtliches Produktgemisch, das Siloxanringe (H₂SiO)ₙ mit n = 4 - 23 enthält. Zusätzlich entstehen aufgrund der Chlorwasserstoffbildung höher kondensierte Ringsysteme und nichtlösliche Rückstände (Gleichung (1)):

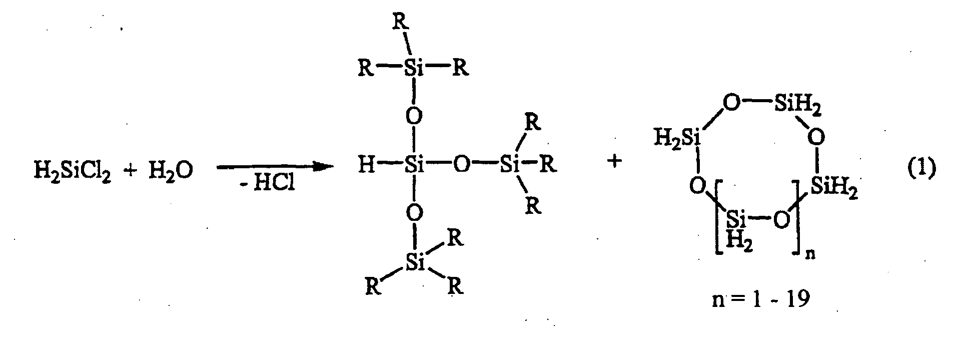

Das cyclische Tetramer (H₂SiO)₄, das Pentamer (H₂SiO)₅ und das Hexamer (H₂SiO)₆ wurden als Hauptprodukte bei der Umsetzung von Dichlorsilan mit wässrigen Lösungsmitteln nachgewiesen (D. Seyferth, C. Prud'Homme, Inorg.Chem. 23 (1984) 4412).

Seyferth und Mitarbeiter versuchten die "kontrollierte" Hydrolyse von Dichlorsilan mit hydratwasserhaltigem Nickelchlorid (NiCl₂ * 6 H₂O) in Hexan, allerdings ohne Erfolg in Bezug auf die Einengung des Produktspektrums (D. Seyferth, C. Prud'Homme, G.H. Wiseman, Inorg.Chem. 22 (1983) 2163).

Aufgabe der vorliegenden Erfindung ist es, ein verbessertes Verfahrens zur Herstellung von wasserstoffreichen Cyclosiloxanen anzugeben.

Die Aufgabe wird erfindungsgemäß gelöst durch ein Verfahren zur Herstellung von wasserstoffreichen Cyclosiloxanen des Typs 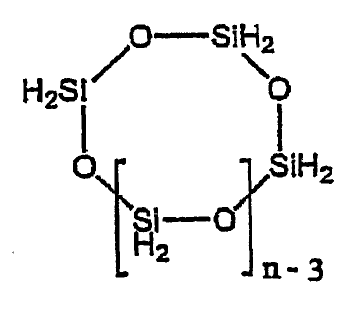 wobei n eine ganze Zahl gleich oder größer 3 ist,
durch Umsetzen:
a.) eines Halogensilans des Typs H₂SiX₂ mit X = Halogen mit
b.) einem Lithiumsalz, Kupfer(II)salz oder einem Salz eines Metalls aus der 2. Haupt- oder 2. Nebengruppe des Periodensystems der Elemente oder einer Mischung dieser Salze,
wobei die Reaktion in einem aprolischen Lösungsmittel durchgeführt wird.

Das erfindungsgemäße Verfahren ist vorteilhaft ein Einschrittverfahren, benötigt keine Zusätze von Katalysatoren und führt selektiv zu wasserstoffreichen (unsubstituierten) Cyclosiloxanen.

Die Ringgröße ist vorteilhaft auf n = 3, 4, 5, 6 (insbesondere n = 4 bis 6) einstellbar, so dass größere Ringe nicht gebildet werden. Ferner besteht die Möglichkeit der Erzeugung von definierten wasserstoffreichen Polysiloxanmolekülen durch eine sanfte Ringöffnungspolymerisation.

Um die Halogensilan-Hydrolyse in Praxis zu starten, genügt bereits eine geringe Konzentration an Protonen. Bei einer Hydrolysesteuerung ausschließlich mit einem Metallcarbonat dient dieses als kontrollierter Wasserspender und als Fänger von Chlorwasserstoff unter Bildung der entsprechenden Metallchloride, siehe Gleichung (2), welche das Verfahren anhand den bevorzugt eingesetzten Carbonaten der Metalle Li (x = 2), Ca und Zn (x = 1) beschreibt:

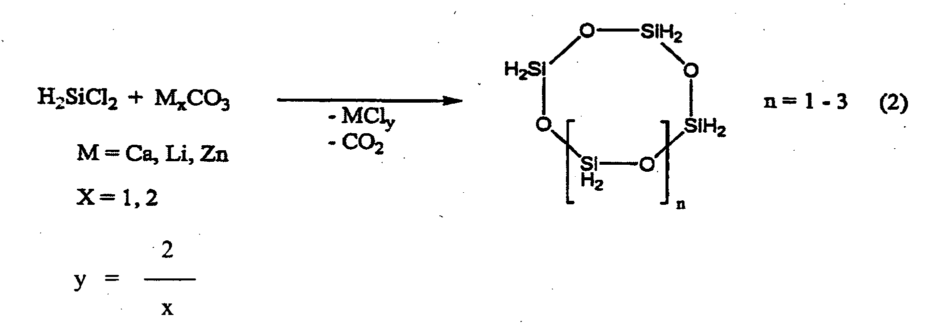

Erfingdungsgemäß genutzte Einflussfaktoren zur Hydrolysesteuerung mit Metallsalzen sind die Art der verwendeten Metallionen, die eingesetzten Anionen, der Anteil an chemisch und physikalisch gebundenem Wasser im Metallsalz und die Eigenschaften des verwendeten organischen Lösungsmittels, insbesondere die Polarität.

Als Lösungsmittel für die Reaktion kommen bevorzugt aprotische Lösungsmittel, besonders bevorzugt Toluol, n-Hexan, n-Pentan, Petrolether, Tetrahydrofuran, Dioxan, Essigsäureethylester und Glyme und Mischungen dieser Lösungsmittel zum Einsatz. Um Nebenreaktionen zu vermeiden ist das Lösungsmittel möglichst wasserfrei und hat bevorzugt einen maximalen Wassergehalt von unter 0,1 %, besonders bevorzugt unter 0,01%. Besonders gute Ergebnisse wurden mit aprotischen, unpolaren Lösungsmitteln, insbesondere n-Hexan, Toluol, Cyclohexan, n-Pentan, n-Heptan erzielt. In den polareren aprotischen Lösungsmitteln, wie z. B. Essigsäurethylester und THF kommt es zur Bildung von größeren Zyklen mit n>6.

Als Kationen der Metallsalze sind Lithium-, Kupfer(II)- und Metallionen eines Metalls aus der 2. Haupt- oder 2. Nebengruppe des Periodensystems der Elemente, wie z. B. Ca²⁺, Sr²⁺, Ba²⁺, Zn²⁺, Cd²⁺, bevorzugt, besonders bevorzugt sind Li⁺, Zn²⁺ und Ca²⁺. Weniger bevorzugt ist Mg²⁺.

Als Anionen der Metallsalze sind Hydrogencarbonat- und Carbonationen bevorzugt. Diese zersetzen sich bei der Einwirkung von Protonen zu Wasser und gasförmigem Kohlendioxid. Durch das Entweichen des Kohlendioxid wird das Gleichgewicht der Reaktion vorteilhaft zur Produktseite verschoben.

Das Verfahren wird unter nahezu wasserfreien Bedingungen durchgeführt. Die eingesetzten Metallsalze, insbesondere Carbonate und Hydrogencarbonate sind daher möglichst wasserfrei (bevorzugt unter 1 %, besonders bevorzugt unter 0,1 % H₂O) und möglichst frei von Hydroxidverunreinigungen.

Die gewählten Metallsalze haben vorteilhaft eine begrenzte Basizität und harte Metallionen, die einen Templat-Effekt beim Hydrolyse/Kondensations-Prozess des Dihalogensilan ausüben. Die Salze sind auch redoxstabil gegenüber der Silicium-Wasserstoff-Bindung der Siloxanringe.

In apolaren Lösungsmitteln eignen sich besonders Calcium-, Lithium- und Zinkcarbonat zur Hydrolysesteuerung. Beim Einsatz von basischem, wasserhaltigen Magnesiumhydroxidcarbonat (4 MgCO₃ * Mg(OH)₂ * 5 H₂O - häufig als basisches Magnesiumcarbonat bezeichnet) und dem stärker basischen Natriumcarbonat treten unerwünschte Nebenreaktionen auf. Die zu basische Wirkung der letztgenannten Salze bedingt einen unerwünschten nucleophilen Angriff auf die Silicium-Wasserstoff-Bindungen. Der Einsatz von reinem, hydroxidfreiem Magnesiumcarbonat ist jedoch möglich.

Als Dihalogensilan kommen vorzugsweise Dichlorsilan H₂SiCl₂ und H₂SiF₂, sowie weniger bevorzugt auch Dibromsilan H₂SiBr₂ zum Einsatz. Dichlorsilan wird in großen Mengen für die Halbleiterindustrie hergestellt und ist daher vorteilhaft ein preiswertes Ausgangsprodukt.

Das Dihalogensilan wird bevorzugt mit 0,5 bis 2, besonders bevorzugt mit 0,75 bis 1,25, Moläquivalenten (bezogen auf das Halogensilan) Metallsalz zum gewünschten Cyclosiloxan hydrolysiert. Es werden vorzugsweise 20 mmol H₂SiCl₂ auf 10 ml bis 80 ml Lösungsmittel, bevorzugt 15 ml bis 25 ml Lösungsmittel eingesetzt.

Die mit dem Erfindungsgemäßen Verfahren hergestellten cyclischen Siloxane (H₂SiO)ₙ sind in Lösung lagerstabil.

Die Bildung kleiner Ringgröße verläuft bevorzugt bei niedrigen Temperaturen. Ein weiterer Grund für die Reaktionsführung unter Kühlung ist der niedrige Siedepunkt des Dichlorsilans (8,9 °C). Die Synthese wird bevorzugt bei einer Temperatur von -80 bis +40 °C, vorzugsweise - 70 bis +10°C, besonders bevorzugt -20 °C bis +5 °C durchgeführt. Besonders bei kleinen Ringen (n = 3 bis 6, insbesondere bei n = 3) wird die Temperaturunter 10°C gewählt, vorzugsweise - 70 bis -0°C. Da die Reaktion exotherm ist, wird die Reaktionsmischung auf die entsprechende Temperatur gekühlt, vorzugsweise mit einem Eisbad oder einer Alkohol/Trockeneis-Mischung.

Die Mischung von Zinkcarbonat als Metallsalz und Hexan oder Toluol als Lösungsmittel erbrachte die besten Ergebnisse, Gleichung (3):

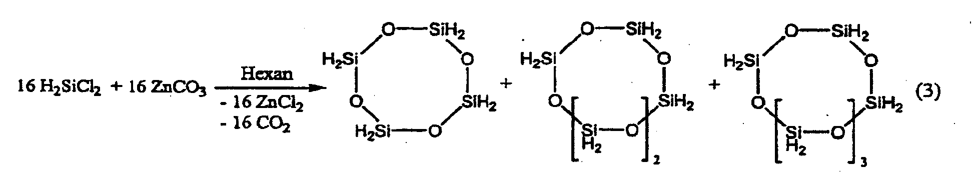

Nach der beschriebenen Umsetzung werden die anorganischen Salze z. B. durch Dekantieren oder Filtration abgetrennt.

In einer besonders vorteilhaften Ausgestaltung des Verfahrens wird zur selektiven Herstellung von Cyclohexasiloxan (H₂SiO)₆ das nach der oben beschriebenen Umsetzung (nach Abtrennen der Salze) das Lösungsmittel zumindest teilweise abgetrennt und anschließend erneut Lösungsmittel hinzugegeben.

Überraschenderweise wird durch ein simples Aufkonzentrieren und anschließendes Verdünnen eine Umlagerung der kleineren Cylosiloxanringe (H₂SiO)₄ und (H₂SiO)₅ in Cyclohexasiloxan (H₂SiO)₆ erreicht und somit eine sehr selektive Synthese von Cyclohexasiloxan (H₂SiO)₆ ermöglicht.

Das Abtrennen des Lösungsmittels, geschieht bevorzugt durch eine Destillation, besonders bevorzugt einer Kältedestillation bei einer Temperatur um Raumtemperatur (unter 40 °C, bevorzugt unter 25 °C) und einem Vakuum (einem Druck kleiner 100 hPa, bevorzugt kleiner 10 hPa).

Nach destillativem Abtrennen des Lösungsmittels liegt eine klare Flüssigkeit vor, nach erneuter Zugabe von Lösungsmittel, bevorzugt n-Hexan, erhält man das Hauptprodukt Cyclohexasiloxan (H₂SiO)₆, mit einem Anteil von weit über 90%. Diese Beobachtung belegt, dass es sich bei dem hexameren Siloxan um ein relativ stabiles Molekül handeln muss. Die kleineren Ringhomologen lagern sich in dieses um. Dies ist ein völlig neuartiger Weg um gezielt zu einer Ringröße von Cyclosiloxanen vom Typ (H₂SiO)₆ zu gelangen.

Bei kurzzeitigem Entfernen des Lösungsmittels scheint das Hexamer als metastabiles Zwischenprodukt zu entstehen. Dieses lagert sich bei Abwesenheit von Lösungsmittel langsam zu höheren Ringhomologen um. Bevorzugt wird daher nach Abtrennen des Lösungsmittels unmittelbar bzw. zumindest innerhalb von 30 min, bevorzugt innerhalb von 5 min, erneut Lösungsmittel hinzugeben.

Die erneute Zugabe von Lösungsmittel führt zu einem Quenchen des Umlagerungsprozesses. Wird das Lösungsmittel für einen längeren Zeitraum als 1 Stunde entfernt entstehen nachteilig Verunreinigungen durch höhere Cyclosiloxanringe mit n > 6.

Das so selektiv hergestellte erzeugten Cyclohexasiloxan (H₂SiO)₆ ist in Lösung lagerstabil.

Als Lösungsmittel für die Umlagerung zu (H₂SiO)₆ wird bevorzugt ein aprotisches apolares Lösungsmittel, besonders bevorzugt n-Hexan, n-Pentan, Cyclohexan oder Toluol eingesetzt.

Für die Umlagerung wird das nach der Abtrennung des Lösungsmittels bevorzugt in 0,25 ml bis 1 ml, besonders bevorzugt 0,4 bis 0,6 ml/pro mmol ursprünglich eingesetztem Halogensilan gelöst.

Die Erfindung wird nachfolgend durch Ausführungsbeispiele näher erläutert: Alle Reaktionen wurden unter Schutzgas mit der Schlenktechnik durchgeführt.

Es wurden kommerziell erhältliche Ausgangsstoffe verwendet und diese nach entsprechenden Laborvorschriften getrocknet.

### Ausführungsbeispiel 1: Herstellung von Cyclosiloxanen vom Typ (H₂SiO)ₙ, n= 4-6, in n-Hexan mit Zinkcarbonat:

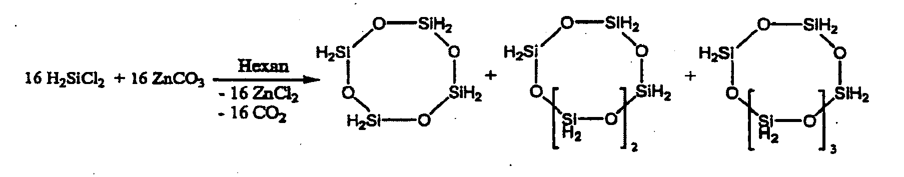

In einem Schlenkgefäß (100 ml) mit Magnetrührstab werden 2,51 g (20 mmol) Zinkcarbonat in 40 mi n-Hexan unter Eiskühlung vorgelegt. Durch ein Septum werden mit einer Spritze 4,23 ml (20 mmol Dichlorsilan) einer 40%igen Mischung aus n-Hexan und Dichlorsilan zugegeben. Nach Ende der Gasentwicklung wird der Feststoff (hauptsächlich ZnCl₂ und überschüssiges ZnCO₃) über eine Schlenkfritte von der Lösung abfiltriert und die Lösung NMR -spektroskopisch (nuclear magnetic resonance - DPX 400 Avance der Firma Bruker, Rheinstetten, Deutschland nach der Methode DEPT 135) sowie mittels GC-MS (HP 5890 Series II gekoppelt mit einem massenselektiven Detektor HP 5971, Einsatz einer Polymethylpolysiloxansäule (30m * 0,25 mm * 0,25µm), Injektor- und Detektortemperatur 180°C) untersucht. Der Feststoff wird mehrmals mit n-Hexan gewaschen und getrocknet, um eventuell anhaftende Siloxanreste zu entfernen.

### ²⁹Si-NMR-Spektrum:

δ(H₂**Si**O)₄ = -46,6 ppm, δ (H₂**Si**O)₅ = -48,4 ppm, δ (H₂**Si**O)₆ = -48,7 ppm,
Verhältnis Tetramer (H₂SiO)₄: Pentamer (H₂SiO)₅: Hexamer (H₂SiO)₆ :
17,5% : 14,0% : 68,5%

### ¹H-NMR-Spektrum:

δ(**H**₂SiO)₄ = ca. 4,9 ppm, δ(**H**₂SiO)₅ = ca. 4,8 ppm; δ (**H**₂SiO)₆ = ca. 4,7 ppm

### GC-MS-Charakterisierung:

183 m/z (H₂SiO)₄; 229 m/z (H₂SiO)₅; 275 m/z (H₂SiO)₆
bei einer Retentionszeit von t = 10,575 min.

Die Analysenergebnisse zeigen, dass es sich bei dem synthetisiertem Produkt um die gewünschten Cyclosiloxane vom Typ (H₂SiO)ₙ. n= 4-6 in sehr hoher Reinheit handelt (mind. 98%).

### Ausführungsbeispiel 2: Herstellung von Cyclosiloxanen, vom Typ (H₂SiO)ₙ in Toluol mit Zinkcarbonat:

In einem Schlenkgefäß (100 ml) mit Magnetrührstab werden 2,51 g (20 mmol) Zinkcarbonat in 40 ml Toluol unter Eiskühlung vorgelegt. Durch ein Septum werden mit einer Spritze 4,23 ml (20 mmol Dichlorsilan) einer 40%igen Mischung aus Toluol und Dichlorsilan zugegeben. Nach Ende der Gasentwicklung wird der Feststoff über eine Schlenkfritte von der Lösung abfiltriert und die Lösung NMR-spektroskopisch, wie in Ausführungsbeispiel 1 beschrieben, untersucht.

### ²⁹Si-NMR-Spektrum:

8(H₂**Si**O)₄= -47,0 ppm, δ(H₂**Si**O)₅= -48,6 ppm, δ(H₂**Si**O)₆= -48,8 ppm,
höhere Homologe bei δ=-48,9 ppm, δ=-49,0 ppm und δ=-50,0 ppm;

Die Analysenergebnisse zeigen, dass es sich bei dem synthetisiertem Produkt um die gewünschten Cyclosiloxane vom Typ (H₂SiO)ₙ, n= 4-6 handelt (∼95%), geringe Verunreinigungen (4 - 5 %) von höheren Ringhomologen sind nachweisbar.

### Ausführungsbeispiel 3: Herstellung von Cyclosiloxanen vom Typ (H₂SiO)ₙ in Essigester mit Calciumcarbonat:

In einem Schlenkgefäß (100m1) mit Magnetrührstab werden 2,0 g (20 mmol) Calciumcarbonat in 40 ml Essigester (Essigsäureethylester) unter Eiskühlung vorgelegt. Durch ein Septum werden mit einer Spritze 4,23 inl (20 mmol Dichlorsilan) einer 40%igen Mischung aus Essigsäureethylester und Dichlorsilan zugegeben. Nach Ende der Gasentwicklung wird der Feststoff über eine Schlenkfritte von der Lösung abfiltriert und diese NMR-spektroskopisch, wie in Ausführungsbeispiel 1 beschrieben, untersucht:

### ²⁹Si-NMR-Spektrum:

δ(H₂**Si**O)₄ = -46,6 ppm, δ(H₂**Si**O)5 = -47,9 ppm, δ(H₂**Si**O)₆ = -48,3 ppm,
höhere Homologe bei δ= -48,4 ppm, δ= -48,5 ppm und δ =-49,5 ppm
Verhältnis Tetramer (H₂SiO)₄: Pentamer (H₂SiO)₅: Hexamer (H₂SiO)₆:
20,4% : 24,0% : 55,6%

Die Analysenergebnisse zeigen, dass es das es sich bei dem synthetisiertem Produkt um die gewünschten Cyclosiloxane vom Typ (H₂SiO)ₙ, n= 4-6 handelt (circa 85 %), jedoch sind diese mit höheren Ringhomologen verunreinigt (circa 15 %).

### Ausführungsbeispiel 4: Herstellung von Cyclosiloxanen vom Typ (H₂SiO)ₙ in Essigester mit Lithiumcarbonat:

In einem Schlenkgefäß (100m1) mit Magnetrührstab werden 1,48g (20 mmol) Lithiumcarbonat in 40 ml Essigester unter Eiskühlung vorgelegt. Durch ein Septum werden mit einer Spritze 4,23 inl (20 minol Dichlorsilan) einer 40%igen Mischung aus Essigsäureethylester und Dichlorsilan zugegeben. Nach Ende der Gasentwicklung wird der Feststoff über eine Schlenkfritte von der Lösung abfiltriert.

### ²⁹Si-NMR-Spektrum:

δ(H₂**Si**O)4= -46,6 ppm, δ(H₂**Si**O)₅ = -48,0 ppm, δ(H₂**Si**O)₆ = -48,3 ppm,
höhere Homologe bei S=-48,5 ppm, S=-49,5 ppm und S=-49,7 ppm
Verhältnis Tetramer (H₂SiO)₄: Pentamer (H₂SiO)₅: Hexamer (H₂SiO)₆:
24,7% : 53,4% : 21,9%

Die Analysenergebnisse zeigen, dass es es sich bei dem synthetisiertem Produkt um die gewünschten Cyclosiloxane handelt (circa 85 %), jedoch sind diese mit höheren Ringhomologen verunreinigt (circa 15 %).

### Ausführungsbeispiel 5: Herstellung von (H₂SiO)₆ in n-Hexan mit Zinkcarbonat:

In einem Schlenkgefäß (100 ml) mit Magnetrührstab werden 2,51 g (20 mmol) Zinkcarbonat in 40 ml n-Hexan unter Eiskühlung vorgelegt. Durch ein Septum werden mit einer Spritze 4,23 ml (20 mmol Dichlorsilan) einer 40%igen Mischung aus n-Hexan und Dichlorsilan zugegeben. Nach Ende der Gasentwicklung wird der Feststoff über eine Schlenkfritte von der Lösung abfiltriert und das Lösungsmittel mittels einer Kältedestillation (Vakuumerzeugung mit flüssigem Stickstoff, Raumtemperatur und Druck kleiner 100hPa) entfernt. Nach 5 min wurde neues n-Hexan zugegeben, anschließend erfolgte die Charakterisierung mittels NMR-Spektroskopie, wie in Ausführungsbeispiel 1 beschrieben (Ausbeute 57,6%).

### ²⁹Si-NMR-Spektrum:

δ(H₂**Si**O)₆ = -48,8 ppm

### ¹H-NMR-Spektrum:

δ(**H**₂SiO)₆ = ca. 4,7ppm

Die NMR Daten zeigen, dass die gewünschte Verbindung (H₂SiO)₆in einer Reinheit von größer 95 % vorliegt.

## Patentansprüche

1. Verfahren zur Herstellung von Cyclosiloxanen des Typs 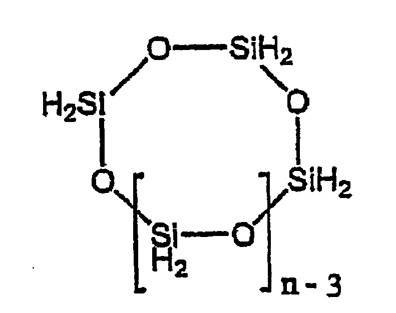 wobei n gleich oder größer 3 ist,
durch Umsetzen:
a.) eines Halogensilans des Typs H₂SiX₂ mit X = Halogen mit
b.) einem Lithiumsalz, Kupfer(II)salz oder einem Salz eines Metalls aus der 2. Haupt- oder 2. Nebengruppe des Periodensystems der Elemente oder einer Mischung dieser Salze,
wobei die Reaktion in einem aprotischen Lösungsmittel durchgeführt wird.

2. Verfahren nach Anspruch 1, **dadurch gekennzeichnet, dass** das Anion des Metallsalzes Carbonat oder Hydrogencarbonat ist.

3. Verfahren nach Anspruch 1 oder 2, **dadurch gekennzeichnet, dass** das Metallsalz ausgewählt ist aus Zinkcarbonat, Calciumcarbonat, Lithiumcarbonat, Kupfercarbonat, Magnesiumcarbonat.

4. Verfahren nach einem der Ansprüche 1 bis 3, **dadurch gekennzeichnet, dass** Halogensilan Dichlorsilan ist.

5. Verfahren nach einem der Ansprüche 1 bis 4, **dadurch gekennzeichnet, dass** die Reaktion bei einer Temperatur von -80 bis 40°C, vorzugsweise - 70 bis +10 °C, durchgeführt wird.

6. Verfahren nach einem der Ansprüche 1 bis 5, **dadurch gekennzeichnet, dass** das Lösungsmittel ausgewählt wird aus n-Hexan, n-Pentan, Essigsäureethylester, Tetrahydrofuran, Dioxan, Toluol, Cyclohexan, Glyme und Gemischen dieser Lösungsmittel.

7. Verfahren nach einem der Ansprüche 1 bis 6 zur selektiven Synthese von 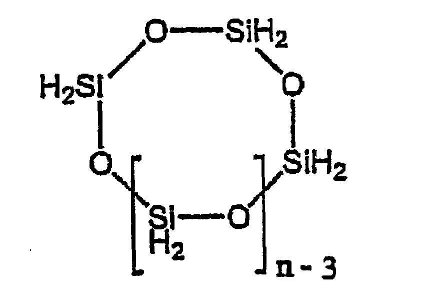 **dadurch gekennzeichnet, dass** nach der Umsetzung das Produkt durch zumindest teilweises Abtrennen des Lösungsmittels aufkonzentriert und anschließend durch erneute Zugabe von Lösungsmittel wieder verdünnt wird.

8. Verfahren nach Anspruch 7, **dadurch gekennzeichnet, dass** das Abtrennen des Lösungsmittels durch Destillation bei einer Temperatur unter 40 °C und einem Druck kleiner 100 hPa durchgeführt wird.

9. Verfahren nach Anspruch 7 oder 8, **dadurch gekennzeichnet, dass** nach Abtrennen des Lösungsmittels innerhalb von 30 min erneut Lösungsmittel hinzugegeben wird.

## Claims

1. Process for preparing cyclosiloxanes of the type 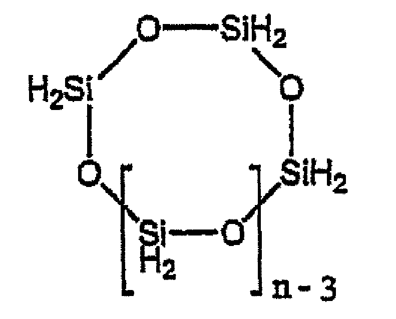 where n is equal to or greater than 3,
by reacting:
a.) a halosilane of the H₂SiX₂ type where X = halogen with
b.) a lithium salt, copper(II) salt or a salt of a metal from main group 2 or transition group 2 of the periodic table of the elements, or a mixture of these salts,
the reaction being carried out in an aprotic solvent.

2. Process according to Claim 1, **characterized in that** the anion of the metal salt is carbonate or hydrogencarbonate.

3. Process according to Claim 1 or 2, **characterized in that** the metal salt is selected from zinc carbonate, calcium carbonate, lithium carbonate, copper carbonate, magnesium carbonate.

4. Process according to any one of Claims 1 to 3, **characterized in that** the halosilane is dichlorosilane.

5. Process according to any one of Claims 1 to 4, **characterized in that** the reaction is performed at a temperature of from -80 to 40°C, preferably from -70 to +10°C.

6. Process according to any one of Claims 1 to 5, **characterized in that** the solvent is selected from n-hexane, n-pentane, ethyl acetate, tetrahydrofuran, dioxane, toluene, cyclohexane, glyme and mixtures of these solvents.

7. Process according to any one of Claims 1 to 6 for selective synthesis of 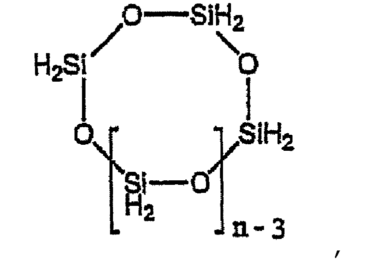 **characterized in that**, after the reaction, the product is concentrated by at least partly removing the solvent and then diluted again by again adding solvent.

8. Process according to Claim 7, **characterized in that** the removal of the solvent is carried out by distillation at a temperature below 40°C and a pressure less than 100 hPa.

9. Process according to Claim 7 or 8, **characterized in that** solvent is added again within 30 min after removal of the solvent.

## Revendications

1. Procédé pour la préparation de cyclosiloxanes du type 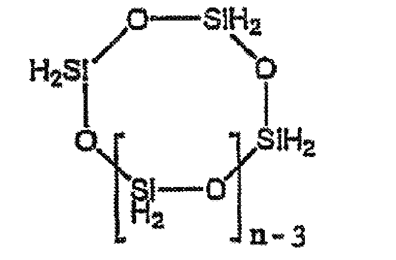 où n est égal ou supérieur à 3 ;
par transformation :
a.) d'un halogénosilane du type H₂SiX₂ avec X = halogène avec
b.) un sel de lithium, un sel de cuivre (II) ou un sel d'un métal du 2ème groupe principal ou du 2ème groupe secondaire du système périodique des éléments ou un mélange de ces sels,
la réaction étant réalisée dans un solvant aprotique.

2. Procédé selon la revendication 1, **caractérisé en ce que** l'anion du sel métallique est le carbonate ou l'hydrogénocarbonate.

3. Procédé selon la revendication 1 ou 2, **caractérisé en ce que** le sel métallique est choisi parmi le carbonate de zinc, le carbonate de calcium, le carbonate de lithium, le carbonate de cuivre, le carbonate de magnésium.

4. Procédé selon l'une quelconque des revendications 1 à 3, **caractérisé en ce que** l'halogénosilane est le dichlorosilane.

5. Procédé selon l'une quelconque des revendications 1 à 4, **caractérisé en ce que** la réaction est réalisée à une température de -80°C à 40°C, de préférence de -70°C à +10°C.

6. Procédé selon l'une quelconque des revendications 1 à 5, **caractérisé en ce que** le solvant est choisi parmi le n-hexane, le n-pentane, l'ester éthylique de l'acide acétique, le tétrahydrofuranne, le dioxane, le toluène, le cyclohexane, le glyme et les mélanges de ces solvants.

7. Procédé selon l'une quelconque des revendications 1 à 6 pour la synthèse sélective de 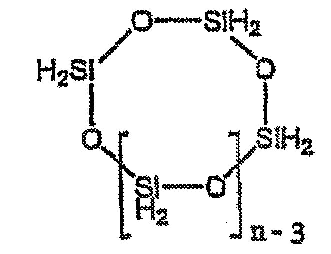 **caractérisé en ce qu'**après la transformation, le produit est concentré par une séparation au moins partielle du solvant et ensuite à nouveau dilué par une nouvelle addition de solvant.

8. Procédé selon la revendication 7, **caractérisé en ce que** la séparation du solvant est réalisée par distillation à une température inférieure à 40°C et une pression inférieure à 100 hPa.

9. Procédé selon la revendication 7 ou 8, **caractérisé en ce qu'**après la séparation du solvant, on ajoute, en moins de 30 minutes, à nouveau du solvant.
